# EUROPEAN PATENT SPECIFICATION

(11) **EP 2 122 851 B1**
(45) Date of publication and mention of the grant of the patent: **24.05.2017**
(21) Application number: 06841034.9
(22) Date of filing: 19.12.2006
(51) Int. Cl.: H04B 7/08

(54) **SELECTION DIVERSITY RECEIVING DEVICE**
WAHLDIVERSITY-EMPFÄNGERANORDNUNG
DISPOSITIF DE RÉCEPTION DE DIVERSITÉ

(43) Date of publication of application: 25.11.2009
(73) Proprietor: AKG Acoustics GmbH, 1230 Wien (AT)
(72) Inventor: KOFLER, Heinrich, 1100 Wien (AT)
(74) Representative: Patentanwälte Barger, Piso & Partner
(86) International application number: PCT/EP2006/012228
(87) International publication number: WO 2008/074343

(56) References cited:
- EP-A- 1 562 309
- WO-A-00/67395
- JP-A- 2 305 234

## Description

The invention relates to a diversity receiving device.

EP 1 562 309 discloses a diversity receiving device having at least two signal paths each of them comprising an antenna for receiving a radio signal, an amplifier for amplifying the received signal, a variable signal level attenuator the individual signal paths being subsequently combined to a common path. This device is used in connection with ground wave digital television broadcasting. Its drawbacks are high energy consumption and great hardware implementation.

The US 5,697,075 A discloses a diversity apparatus for a global positioning system having two antennas with corresponding signal paths. The antenna of each signal path is directly coupled to the input of a low noise amplifier (LNA) supplied by a voltage source. Variable signal level attenuators in form of pin-diodes are provided downwards in the signal paths which subsequently are combined to a common data line. A capacitor is connected between the connection of the LNA voltage source to the signal path and the variable signal level attenuator. The output signal of each LNA is transferred to a coupling line connected to a selector providing in dependence of the signal level of each signal path an appropriate current to the pin-diode, in order to disconnect the signal path having a low level from the common data line.

The actual receiver part comprising a filter, a base frequency generator, an amplifier and a demodulator is provided within the common data line for decoding the signal transferred from one of the two antennas. The disadvantage of such a system consists in a high power consumption of the diversity part of the receiving system. The circuit design of each signal path makes it necessary to provide two power supplies, one stationary supply for the LNA and one variable supply for the pin-diode. The necessary amount of electronic components and the high power consumption makes this diversity receiver a high cost product.

In other prior art antenna diversity receivers for professional wireless systems the RF signals coming from two antennas are directly switched (without amplifying) in dependence of the RF-level and/or the gradient of the signal strength of the actual antenna. However, this increases the noise figure of the receiver caused by the attenuation of the antenna switch (being especially a problem in analogue transmitting systems).

In a wireless radio transmission the quality of a transmitted low frequency signal has to be kept as good as possible, that means that the signal to noise ratio (SNR) has to be as high as possible. For professional wireless systems it is a big benefit, if a diversity system can be used. With a diversity system the negative influences on the transmitted audio-quality caused by the RF-signal fading effects (dropouts) during the movement of the actor can be reduced or even avoided. This is the reason why professional wireless systems have diversity systems for their receiver installed.

Generally two kinds of diversity systems are known from prior art:
Firstly systems often denoted by "true diversity". From the technical point of view the best diversity system is the "true diversity", where two identical signal paths are realised each of them having a complete diversity part and a complete receiver part. In dependence of the RF-level (indicated by the Receiver-Signal-Strength-Indicator (RSSI) of the demodulator) the demodulated audio signal with the higher RF-level is used. The disadvantages for this kind of system are
   - increased bill of material,
   - increased amount of necessary components and their
   - power consumption.

These drawbacks are in contradiction to the requirements for mobile transmitters which should be as small as possible and where the battery life time should be as long as possible.

Secondly the so called antenna diversity is known. The two signal paths with the antennas are combined to a common path having one RF receiver. In dependence of the changing RSSI-signal (or if the RF/RSSI-level falls below a defined threshold) the active antenna will be changed under use of a semiconductor-switch (pin-diode). The advantage of this system obviously is the low price, because only one RF module is necessary. The disadvantages are:
- not all dropouts can be avoided (this is highly independent of the algorithm which is used to make a prediction of the estimated RF level situation of the second antenna),
- the commonly used PIN-diode switches need additional current-consumption (bad for the battery life time of mobile receivers) and this PIN-diode switches cause additional attenuation which increases the noise figure of the receiver (sensitivity and acting-range decreases).

Examples of various kinds of diversity systems are given in the following prior art documents. US 6,871,054 B2 discloses a two antenna diversity system by controlling bias voltages on pin-diodes. By increasing the reverse bias voltage impressed upon a pin-diode, an RF signal impressed upon the diode is increasingly attenuated. Downwards the pin-diodes the two signal paths are combined to a common line towards a receiver. Similar systems based on the same principle are known from block diagrams of JP 2 305 234, JP 2001 326593, JP 61 073 437 and JP 10 163 941.

From figures of JP 8 107 306 a diversity antenna pattern included in the glass of vehicles is known, the system using pin-diodes as switching elements. A similar vehicle antenna is illustrated in the figures of JP 2 062 131, also using a pin-diode as switching element.

DE 2 318 260 discloses a diversity system having two antennas and corresponding signal paths having controllable amplifiers and being combined to a common line using pin-diodes.

DE 3536826 A1 discloses a diversity antenna for mobile radio devices, having two antennas and a switch allowing to choose between the signals of the two antennas.

US 7,116,952 B2 discloses a diversity system having switches combining the output signals of several band filters connected in the signal path of an antenna. A LNA is provided for each switch thus maximizing costs and energy consumption.

DE 601 11 765 T2 discloses a wireless communication system having multiple transmission modes, in order to receive radio signals from desired senders, but to exclude signals from noise sources thereby using a plurality of antennas. However, this document does not contain any disclosure regarding to antenna circuits.

DE 20 2006 007 918 U1 discloses a receiver system comprising a plurality of antennas and a weighting means weighting and combining the individual antenna signals, in order to achieve an optimized performance of the transmitted signal. This system is very complicated due to its components since it needs a high capacity weighting processor as well as large code memories.

The object of the present invention is to overcome the problems mentioned above with reference to prior art and to provide a low cost diversity receiving system having a high quality transmission, a low power consumption and low cost with regard to required electronic components.

The problem to be solved is to guarantee a stable wireless connection between a wireless transmitter and receiver with a low dropout rate, high signal to noise ratio and to provide at the same time a solution with low power consumption and minimum effort for hardware realisation.

This object is achieved by a diversity receiving system mentioned above by the fact, that in each signal path the current source supplying the variable signal level attenuator is connected via the variable signal level attenuator to the amplifier and the variable signal level attenuator has in parallel a controllable bypass line which comprises variable resistance means.

With the invention the amount of dropouts in comparison with a non-diversity-system is significantly reduced, the noise-figure of the receiver (sensitivity and acting-range) stays the same and nearly the same battery life time similar to that of a non diversity receiver can be reached. In order to get a better noise-figure performance and thus a higher acting range the switching is shifted from the input to the output of the amplifier.

The constant current source supplies both, the variable signal level attenuator, which is for example a pin-diode, and the amplifier, thus only one power source is required. The current provided by the constant current source flows via the pin-diode to the signal output of the amplifier. (it is of course not compulsory to use a constant current source, principally any kind of current source, also an adjustable one, may be used.) In this case the pin-diode is switched through and the signal from the corresponding antenna is transmitted to the common path with the receiver part. In order to disconnect this signal path from the common path the current flow via the pin-diode has to be reduced, thus increasing the resistance and subsequently switching off of the diode. This is done for example if the level of the individual signal path or of the receiver output signal goes below a defined threshold. According to the invention this is achieved by a controllable bypass line connected in parallel to the variable signal level attenuator. The bypass line comprises variable resistance means, i.e. an electrical component, which in dependence of a control signal changes its electrical resistivity.

The corresponding control signals for the controllable bypass line are provided via a feedback loop. In a preferred embodiment a controllable current source serves as variable resistance means, the current source being a component, whose internal resistance changes in dependence of the current strength. Other possible embodiments of a variable resistance means are: a simple switch, a potentiometer, a controlled diode or transistor, in general every component, whose electrical resistivity may be changed. Dependent on the actual electrical conductivity of the variable resistance means the bypass line is opened, partially limited or closed. The current generated by the constant current source is just redirected via the variable resistance means but still flows into the amplifier.

In an preferred embodiment the amplifier is deactivated after the diode is switched off. This is achieved via the feedback loop connected also to the control input of the amplifier, thereby adjusting the operating point of the amplifier.

In an preferred embodiment the variable resistance means is a controllable current source.

In a further preferred embodiment the current source supplying the variable signal level attenuator is connected within the controllable bypass line. The mutual influence of the two current sources, both being part of the bypass line, enables to change the current trough the variable signal level attenuator and at the same time to hold the current for the amplifier constant.

In an preferred embodiment the controllable bypass line is connected via a control line to at least one signal level detector. In an preferred embodiment the signal level detector is provided in the common path. In a preferred embodiment a signal level detector is provided in each diversity signal path. In a preferred embodiment the control line is connected to a control input of the amplifier.

In a preferred embodiment a low pass filter is provided at the control input of the amplifier. This makes it possible, that the amplifier is switched off or switched on, respectively, time-delayed with respect to the variable signal level attenuator.

The invention is described in detail with reference to the accompanying drawing. Thereby
Fig. 1 the time dependence of the RSSI-level of two individual antennas as well as the antenna diversity of a prior art system,
Fig. 2 a block diagram of a prior art antenna diversity system,

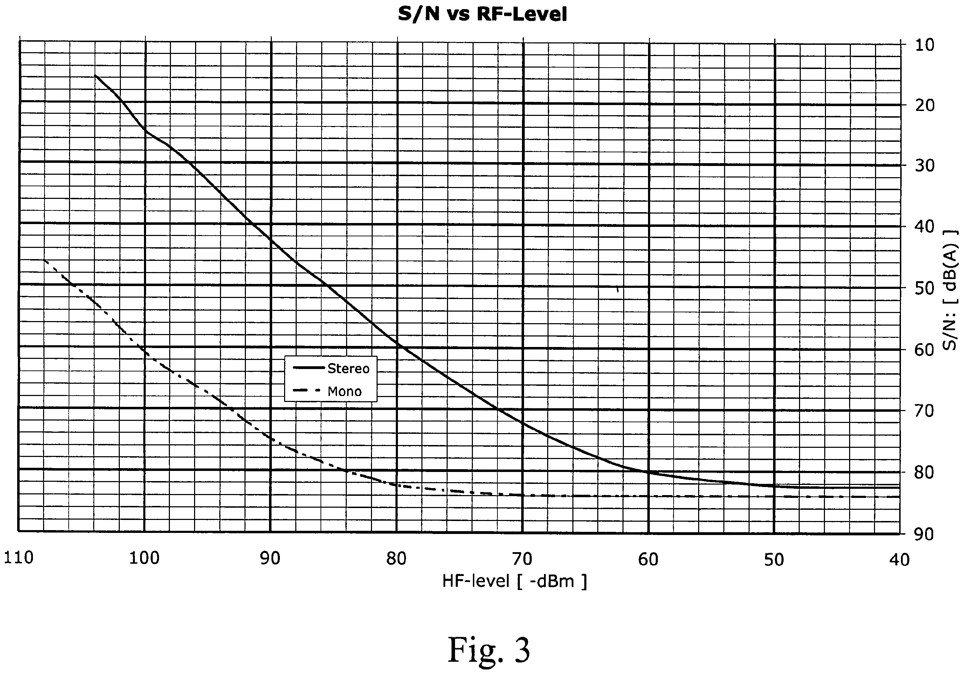

Fig. 3 the SNR of a mono and stereo signal in dependence of the RF-level,
Fig. 4 a block diagram of a diversity receiving system according to the invention,
Fig. 5 a block diagram of the amplifier of Fig. 4 in detail,
Fig. 6 a block diagram of the variable signal level attenuator of Fig. 4,
Fig. 7 a block diagram of an embodiment of the diversity receiving system according to the invention,
Fig. 8 a block diagram of the amplifier of Fig. 7 in detail with the connection to the diversity control, and
Fig. 9 a block diagram of an embodiment of the controllable bypass line.

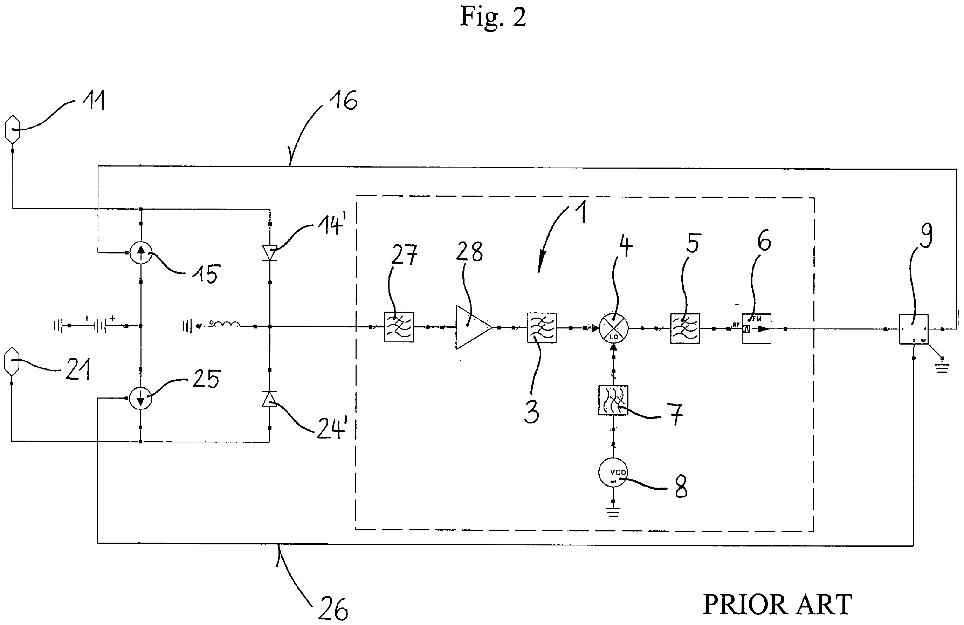

In prior art wireless systems with antenna diversity, for example when using wireless microphone, the antenna switch is directly connected between the antennas and the so called Low Noise Amplifier AMP-A, as shown in Fig. 2. The advantage of this kind of structure in comparison to a "true-diversity" system (with a complete RF receiver part in each signal path) is the reachable cost-minimum. But it is clear that the optimal dropout-suppression of the "true-diversity"-system can not be reached for analog professional systems - it stays always a compromise.

Fig. 2 shows a prior art diversity receiving system having a diversity part with two antennas 11, 21 and corresponding signal paths 10, 20 being combined to a common path 1 via mutual switching of two pin-diodes 14', 24' and having one receiver part for the signal transmitted to the common path 1. Each pin-diode 14', 24' is connected to a controllable current source 15, 25. The receiver part comprises band filter 27, an amplifier 28, a filter 3 downwards the amplifier, a mixer 4 mixing the signal with a reference signal of a voltage controlled oscillator (VCO) 8 passing trough a LO(local oscilator)-filter 7, an intermediate frequency (IF) filter 5 and a demodulator 6. The receiver output signal level, for example the RSSI-value, is measured with a signal level detector 9 and used, to estimate the quality of the transmitted signal. If the signal level falls below a threshold a control signal, for example a constant voltage, is generated by means of a microcontroller, which for example is included within the signal level detector 9. A control signal for each signal path 10, 20 is fed on control lines 16, 26, thereby changing the current provided by the current source 15, 25 and thus switching the pin-diodes 14', 24' and changing the antenna used for further signal processing.

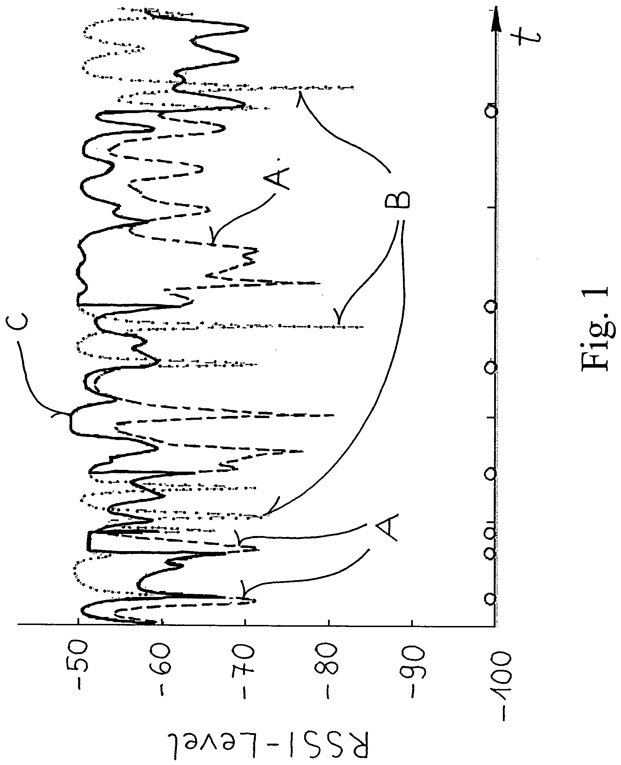

Fig. 1 shows the time dependence of the RSSI-levels of two individual antennas as well as the antenna diversity of a prior art system according to Fig. 2. Curves A (dashed) depict the RSSI-level of the signal coming from antenna 11, and curves B (dotted) depict the RSSI-level of the signal coming from antenna 21. Curve C (full line) shows the RSSI-level of the receiver output with antenna diversity. The circles on the time scale denote to the time of switching from one antenna to another. As seen from curve C the quality of the transmission, i.e. the receiver output signal, of prior art systems depicts not the best solution, since dropouts cannot be avoided.

In the case that the switching devices used (in professional wireless systems) have an attenuation of typically 2dB (PIN-diode use and diode-devices dependent), this will increase the noise figure and with it decrease the sensitivity , the acting range and the signal to noise behaviour of the receiver. This to know is specially important for wireless-systems with ordinary analog (stereo) transmission to achieve the best signal to DE 20 2006 007 918 U1 discloses a receiver system comprising a plurality of antennas and a weighting means weighting and combining the individual antenna signals, in order to achieve an optimized performance of the transmitted signal. This system is very complicated due to its components since it needs a high capacity weighting processor as well as large code memories.

The object of the present invention is to overcome the problems mentioned above with reference to prior art and to provide a low cost diversity receiving system having a high quality transmission, a low power consumption and low cost with regard to required electronic components.

The problem to be solved is to guarantee a stable wireless connection between a wireless transmitter and receiver with a low dropout rate, high signal to noise ratio and to provide at the same time a solution with low power consumption and minimum effort for hardware realisation.

This object is achieved by a diversity receiving system mentioned above having the features of the characterising portion of claim 1; with other words; in each signal path the current source supplying the variable signal level attenuator is connected via the variable signal-level attenuator to the amplifier and the variable signal level attenuator has in parallel a controllable bypass line which comprises variable resistance means.

With the invention the amount of dropouts in comparison with a non-diversity-system is significantly reduced, the noise-figure of the receiver (sensitivity and acting-range) stays the same and nearly the same battery life time similar to that of a non diversity receiver can be reached. In order to get a better noise-figure performance and thus a higher acting range the switching is shifted from the input to the output of the amplifier.

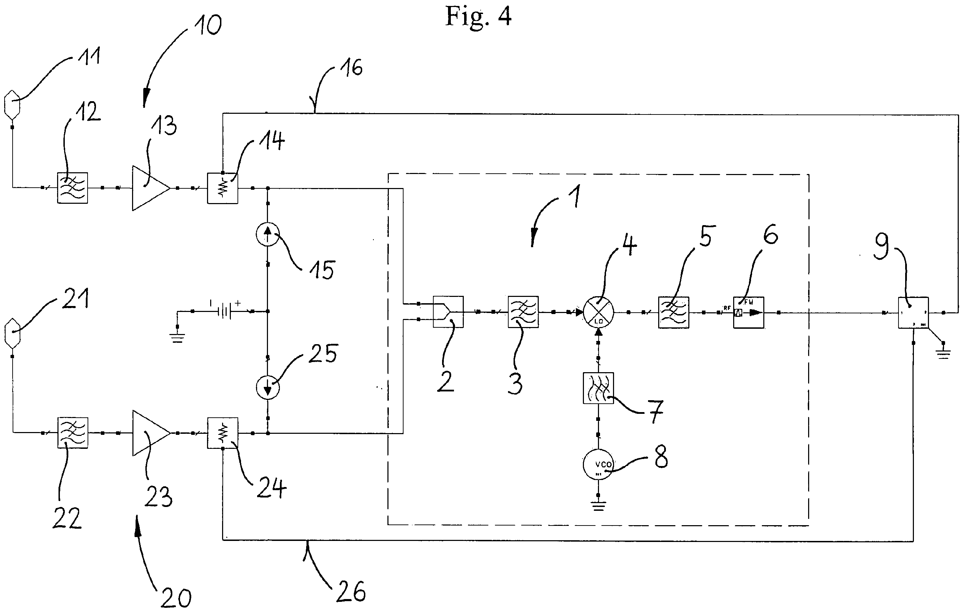

The constant current source supplies both, the variable signal level attenuator, which is for example a pin-diode, and the amplifier, thus only one power source is required. The current provided by the constant current source flows via the pin-diode to the signal output of the amplifier. (it is of course not compulsory to use a constant current source, Fig. 4 shows a diversity receiving device according to the invention having a diversity part of at least two antennas 11, 21 with corresponding individual signal paths 10, 20 being combined within a combiner 2 to a common path 1 and a receiver part for filtering, amplifying, decoding and demodulating the RF signal on the common path 1.

Since both signal paths have the same structure, the following description relates to both of them. In each signal path 10, 20 antenna 11, 21 is connected via a filter 12, 22 to the signal input of an amplifier 13, 23, whose signal output is connected to the signal input of a controllable attenuator 14, 24. The controllable attenuator 14, 24 (schematically shown) is connected with its signal output to a current source 15, 25.

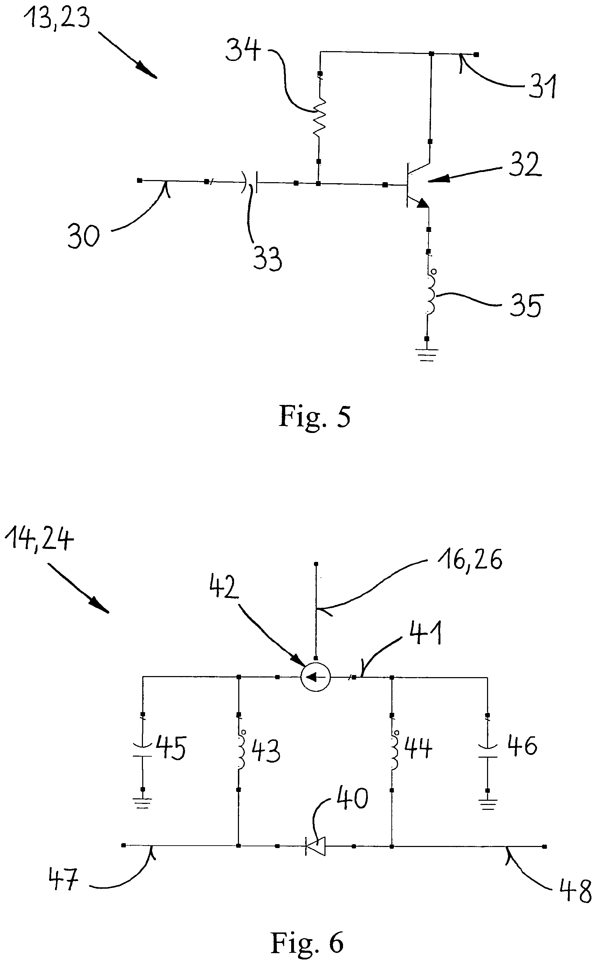

Fig. 6 shows in detail an example of an controllable attenuator 14, 24, which in the present embodiment is voltage controllable with signal input 47 and signal output 48. The controllable attenuator of Fig. 6 comprises a variable signal level attenuator 40 in form of a pin-diode. Instead of a pin-diode any kind of variable signal level attenuator may be used, for example a transistor, such as bipolar transistors or field effect transistors, diodes etc. A variable resistance means 42, which in the embodiment shown is a voltage controllable current source, is connected in parallel to the pin-diode, thus providing for the pin-diode a controllable bypass line 41. The diversity control signal generated in dependence of a signal level detector 9 by the microcontroller and fed to the control lines 16 and 26, respectively, controls the variable resistance means 42 thus determining the current-flow via the pin-diode.

The capacitors 45, 46 are used in order to act as integrator during the switching process and to build up together with the inductors 43, 44 a defined (high) impedance for the RF amplifier at the working frequency band used.

The current source 15, 25 of Fig. 4 supplies both the variable signal level attenuator 40 as well as the amplifier 13 or 23, respectively. For this purpose there exists a galvanic connection between the amplifier and the variable signal level attenuator 40. In the embodiment shown the current sources 15, 25 of the signal paths 10 and 20 are fed by the same power supply. The signal outputs of the controllable attenuators 14, 24 are connected to a combiner 2 combining the individual signal paths 10, 20 to a common path 1. A receiver part is provided within the common path having substantially the same structure as already discussed with regard to Fig. 2, but without the band filter 27 and amplifier 28, since these components are already provided in each signal path 10, 20 between antenna and controllable attenuator.

The output level of the receiver is measured as RSSI level by the signal level detector 9, which sends in dependence of the signal level control signals via control lines 16, 26 to the controllable attenuators 14, 24. It is of course possible to use only one control line for both attenuators.

Figs. 5 and 6 show a possible and simplified structure of the input amplifier 13 or 23 and the controllable attenuator 14, 24. As input amplifier for example a simple RF-bipolar-transistor can be used, as shown in Fig. 5 in detail, with the signal input 30, the capacitor 33, the resistance 34, the bipolar transistor 32, the inductivity 35 and the signal output 31. The invention of course is not limited to this embodiment, since amplifiers with different structure may be used and are generally well known in prior art. An important point is, that the noise-figure at the set point of operation should be preferably as small as possible, in order to achieve best results.

If the current source 15, 25 (shown in Fig. 4) for the pin-diode (shown in Fig. 6), which also supplies the amplifier, flows through the pin-diode the attenuation is set to its minimum. If the voltage of the diversity control signal rises (changes), the voltage controlled current source 42 will direct the current directly to the input amplifier 13 or 23, respectively. This causes an increase of the resistance of the PIN diode and thus an attenuation of the RF-signal of this path.

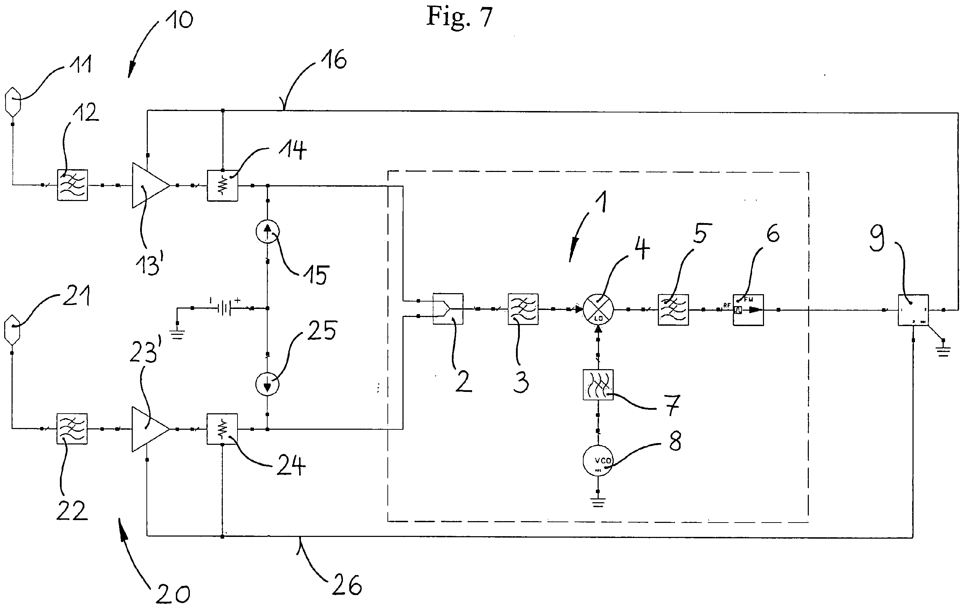

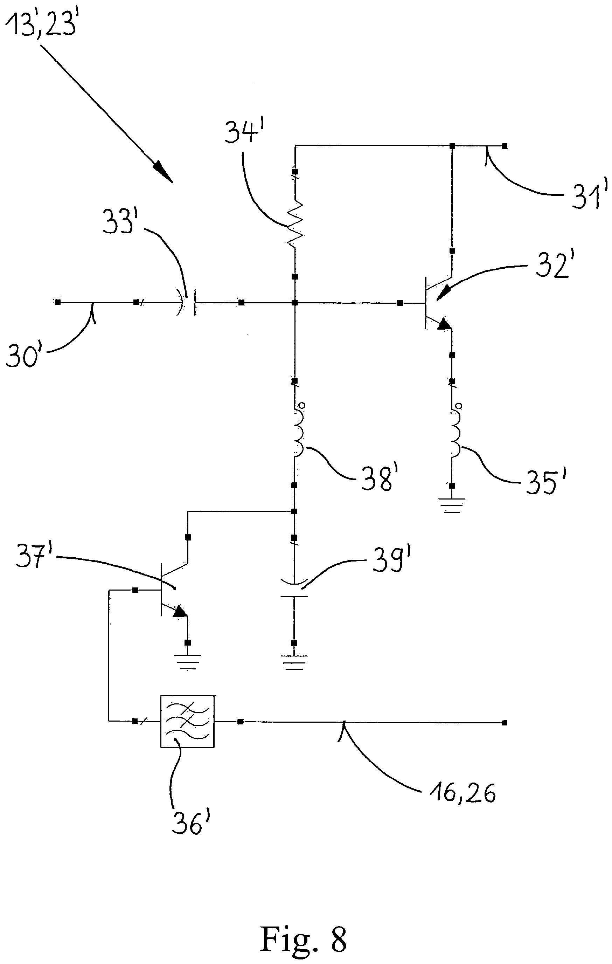

In order to reduce the total current consumption further more (and to reach essentially the same power consumption as it is in a non diversity system) the following action is taken: After the pin-diode has been switched off, the switching signal coming from the signal level detector 9 (time-delayed) can be used to switch off also the input amplifier 13', 23'. The required modifications to achieve this object are described below with reference to the figures 7 and 8.

The difference between the embodiments of Fig. 4 and Fig. 7 consists in the fact, that in Fig. 7 the feedback line from the signal level detector 9 is not only connected with the controllable attenuator 14, 24, but also with the amplifier 13, 23. The two control signals from the signal level detector 9 will now also be used to switch the input amplifiers 13' and 23'. This can be done for example by shortening the base-voltage of the bipolar transistor to ground as it can be seen in the simplified schematic of Fig. 8 showing the amplifier 13', 14' in detail.

The amplifier, shown in Fig. 8, is a gain controlled amplifier with the signal input 30', the capacitor 33', the resistance 34', the bipolar transistor 32', the inductivities 38' and 35', transistor 37' and capacitor 39' and the signal output 31'. As already mentioned it is important, that the input amplifier is switched off time-delayed with regard to the variable signal level attenuator and switched on, before the variable signal level attenuator is switched on. This will be done inside the low pass filter 36', being connected between the control line 16 or 26 and the base of transistor 37'. The low pass filter 36' may be a simple low pass filter, e.g. built up by a resistor and a capacitor, having a larger time constant than the current sources. In an preferred embodiment the only difference to a ordinary band-pass-filter consists in the fact, that, if the control signal changes from high to low the capacitor of the low pass filter has to be discharged faster than charged. This can easily be achieved for example by an ordinary diode.

When the control voltage in the control line 16, or 26 increases, the pin-diode is switched off, the signal can no longer pass to the receiver. Time delayed (caused by the low pass filter 36') the transistor 37' becomes conductive if the control-voltage gets higher than a characteristic threshold (in the present case for example 0,65V). This results in the fact, that the base-current for the transistor-amplifier 32' will be shortened to ground and the amplifier subsequently stops its operation.

The voltage controlled current source 42 (Fig. 6) for the activation and deactivation of the PIN-diodes can easily be realized under use of a simple bipolar transistor for low frequency applications for example.

The current source 15 or 25 supplying pin-diode and amplifier acts to stabilize generally the point of operation of the input-amplifier. The voltage controlled current source used as variable resistance means 42 in the bypass line of the pin-diode, reduces the current flow through the PIN-diode if the switching signal coming from the microcontroller of the signal level detector 9 changes.

To deactivate the amplifier, e.g. a low noise amplifier, in the condition where the PIN diode is switched off, it is of course very important to switch the amplifier slowly time-delayed off, and before the PIN-diode is activated again to switch the amplifier faster on than the PIN-diode.

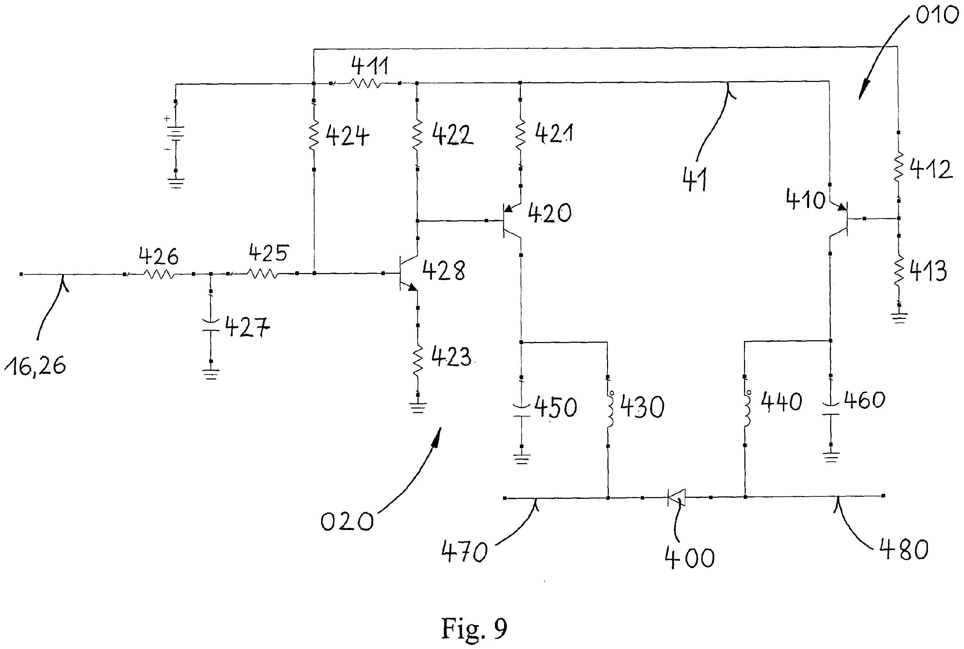

Fig. 9 shows a preferred embodiment where the current source for supplying the variable signal level attenuator 40 is integrated within the controllable bypass line 41 together with the controllable current source for controlling the bypass line 41.

The block diagram of Fig. 9 shows an example of how the two current sources 010, 020 required and the switching circuit of the variable signal level attenuator, in the present case the PIN-diode, may be realized. The first current source 010 (with regard to its function corresponding to current source 15 or 25 of Fig. 4 and 7) is built up by the electrical components: transistor 410 and resistivities 411, 412 and 413. This current source supplies the pin-diode as well as the amplifier in the case the bypass line is closed.

The second current source 020 being voltage controllable is built up by the components: transistor 420, resistivities 421, 422, as well as transistor 428, resistivities 424, 423, 425. This current source 020, which is controlled by the control lines 16 or 26, respectively, corresponds with regard to its function to the voltage controllable current source 42 of Fig. 6.

As seen from Fig. 9 both current sources 010, 020 are integrated within the bypass line 41 of the variable signal level attenuator 400. In other words: the two current sources 010, 020 are connected in parallel.

If the diversity control signal coming from the microcontroller of the signal level detector 9 via control line 16, 26 has a logical low value, the base-voltage at the transistor 428 is to low for switching. In this case the current source 020 build up by the transistor 420 stays in the condition OFF, which means that the complete current flowing via the variable signal level attenuator 400 and the amplifier (not shown in Fig. 9, but connected to the signal input 470) is generated by the current source 010 build up by the transistor 410. If the voltage of the diversity control signal changes now from logical low to high, the voltage at the base of transistor 428 starts to increase (time-delayed caused by the low pass filter built up by resistivity 426 and capacitor 427), whereby the current generation of the current source 020 build up by transistor 420 rises. In fact that the overall current consumption (defined by the components 410, 411, 412 and 413) have to stay the same, the transistor 410 becomes resistively high and the current flowing trough the PIN-diode decreases until the transistor 420 has reached the point of saturation and no current is flowing trough the PIN-diode anymore.

The embodiment of Fig. 9 makes it possible, to change the current flow through the variable signal level attenuator 40 and at the same time to maintain a constant current flow for the amplifier. In other words the current flow via line 470 to which the amplifier is connected stays constant regardless of the actual switching state of the variable signal level attenuator 40.

The current through transistor 420 rises in the same extent as the current trough transistor 410 decreases. In other words: At the same time as resistivity of transistor 420 decreases resistivity of transistor 410 rises.

Instead of measuring the signal level at the output of the receiver part, it is also possible to measure the signal level in each diversity signal path and to use this information for selecting the appropriate antenna having the larger signal level. The latter variant can be achieved for example in a similar way as disclosed US 5,697,075 A, namely by a coupling line for each signal path. The signal paths are inductively coupled with a separate line serving to determine or estimate the actual signal level. A comparator comparing the two signals send a control signal to the control line thereby activating or deactivating the variable signal level attenuator of a corresponding signal path.

The invention is of course not limited to the embodiments shown. The basic idea is to provide a power supply for supplying both the amplifier as well as the variable signal level attenuator in each signal path, in order to reduce power consumption. The diversity receiving device according to the invention is all-purpose, comprising the ability to receive all kinds of signals, such as mono, stereo and multi-channel signals, in analogue as well as in digital format.

The field of application is very broad and comprises any kind of mobile and stationary equipment, such as mobile phones, portable pocket receiver, GPS-receiver, in ear monitoring systems, vehicle applications (radio receiver, phone, etc.), wireless transmission systems between computers, workstations, etc.

## Claims

1. Diversity receiving device having at least two signal paths (10, 20) each of them comprising an antenna (11, 21) for receiving a radio signal, an amplifier (13, 23; 13', 23') for amplifying the received signal, a variable signal level attenuator (40) for attenuating the amplified signal and a current source (15, 25, 010) for supplying the variable signal level attenuator (40), the at least two signal paths (10, 20) being subsequently combined to a common path (1), **characterized in that** in each signal path (10, 20) the current source (15, 25, 010) supplying the variable signal level attenuator (40) is connected via the variable signal level attenuator (40) to the amplifier (13, 23; 13', 23') and the variable signal level attenuator (40) has in parallel a controllable bypass line (41) which comprises variable resistance means (42, 020).

2. Diversity receiving device according to Claim 1, **characterized in that** the variable signal level attenuator (40) is a pin-diode.

3. Diversity receiving device according to Claim 1 or 2, **characterized in that** the variable resistance means (42) is a controllable current source (020).

4. Diversity receiving device according to Claim 3, **characterized in that** the current source (15, 25, 010) supplying the variable signal level attenuator (40) is connected within the controllable bypass line (41).

5. Diversity receiving device according to one of Claims 1 to 4, **characterized in that** the controllable bypass line (41) is connected via a control line (16, 26) to at least one signal level detector (9).

6. Diversity receiving device according to Claims 5, **characterized in that** the signal level detector (9) is provided in the common path (1).

7. Diversity receiving device according to Claim 5, **characterized in that** a signal level detector (9) is provided in each signal path (10, 20).

8. Diversity receiving device according to Claim 5, **characterized in that** the control line (16, 26) is connected to a control input of the amplifier (13', 23').

9. Diversity receiving device according to Claim 8, **characterized in that** a low pass filter (36') is provided at the control input of the amplifier (13', 23').

## Patentansprüche

1. Diversity-Empfängeranordnung mit wenigstens zwei Signalpfaden (10,20), die jeweils eine Antenne (11, 21) zum Empfang von Radiosignalen, einen Verstärker (13, 23; 13', 23') zur Verstärkung des empfangenen Signals, einen variablen Signalhöhenabschwächer (40) zur Abschwächung des verstärkten Signals und eine Stromquelle (15, 25, 010) zur Versorgung des variablen Signalhöhenabschwächer (40) enthält, wobei die wenigstens zwei Signalpfade (10,20) anschließend zu einem gemeinsamen Pfad (1) zusammengefasst sind, **dadurch gekennzeichnet, dass** in jedem Signalpfad (10, 20), die den variablen Signalhöhenabschwächer (40) versorgende Stromquelle (15, 25, 010) über den variablen Signalhöhenabschwächer (40) mit dem Verstärker (13, 23; 13', 23') verbunden ist und der variable Signalhöhenabschwächer (40) eine parallelgeschaltene, mit einer variablen Widerstandseinrichtung (42, 020) versehene regelbare Bypassleitung (41) aufweist.

2. Diversity-Empfängeranordnung nach Anspruch 1, **dadurch gekennzeichnet, dass** der variable Signalhöhenabschwächer (40) eine PIN-Diode ist.

3. Diversity-Empfängeranordnung nach Anspruch 1 oder 2, **dadurch gekennzeichnet, dass** die variablen Widerstandseinrichtung (42) eine regelbare Stromquelle (020) ist.

4. Diversity-Empfängeranordnung nach Anspruch 3, **dadurch gekennzeichnet, dass** die den variable Signalhöhenabschwächer (40) versorgende Stromquelle (15, 25, 010) in die regelbaren Bypassleitung (41) geschalten ist.

5. Diversity-Empfängeranordnung nach Anspruch 1 bis 4, **dadurch gekennzeichnet, dass** die regelbare Bypassleitung (41) über eine Steuerungsleitung (16, 26) mit zumindest einem Signalhöhendetektor (9) verbunden ist.

6. Diversity-Empfängeranordnung nach Anspruch 5, **dadurch gekennzeichnet, dass** der Signalhöhendetektor (9) im gemeinsamen Pfad (1) vorgesehen ist.

7. Diversity-Empfängeranordnung nach Anspruch 5, **dadurch gekennzeichnet, dass** der Signalhöhendetektor (9) in jedem Signalpfad (10, 20) vorgesehen ist.

8. Diversity-Empfängeranordnung nach Anspruch 5, **dadurch gekennzeichnet, dass** die Steuerungsleitung (16, 26) mit einem Steuerungseingang des Verstärker (13', 23') verbunden ist.

9. Diversity-Empfängeranordnung nach Anspruch 8, **dadurch gekennzeichnet, dass** ein Tiefpassfilter (36') am Steuerungseingang des Verstärker (13', 23') vorgesehen ist.

## Revendications

1. Dispositif de réception en diversité qui présente au moins deux chemins de signaux (10, 20), chacun d'eux comprenant une antenne (11, 21) destinée à recevoir un signal radioélectrique, un amplificateur (13, 23 ; 13', 23') destiné à amplifier le signal reçu, un atténuateur de niveau de signal variable (40) destiné à atténuer le signal amplifié, et une source de courant (15, 25, 010) destinée à alimenter l'atténuateur de niveau de signal variable (40), les deux chemins de signaux (10, 20) étant combinés par la suite en un chemin commun (1), **caractérisé en ce que**, dans chaque chemin de signal (10, 20), la source de courant (15, 25, 010) qui alimente l'atténuateur de niveau de signal variable (40), est connectée par l'intermédiaire de l'atténuateur de niveau de signal variable (40) à l'amplificateur (13, 23 ; 13', 23'), et l'atténuateur de niveau de signal variable (40) présente en parallèle une ligne de dérivation qui peut être commandée (41), comprenant des moyens formant résistance variable (42, 020).

2. Dispositif de réception en diversité selon la revendication 1, **caractérisé en ce que** l'atténuateur de niveau de signal variable (40) est une diode PIN.

3. Dispositif de réception en diversité selon la revendication 1 ou la revendication 2, **caractérisé en ce que** les moyens formant résistance variable (42) sont une source de courant qui peut être commandée (020).

4. Dispositif de réception en diversité selon la revendication 3, **caractérisé en ce que** la source de courant (15, 25, 010) alimentant l'atténuateur de niveau de signal variable (40), est connectée à l'intérieur de la ligne de dérivation qui peut être commandée (41).

5. Dispositif de réception en diversité selon l'une quelconque des revendications 1 à 4, **caractérisé en ce que** la ligne de dérivation qui peut être commandée (41) est connectée par l'intermédiaire d'une ligne de commande (16, 26) à un détecteur de niveau de signal (9) au moins.

6. Dispositif de réception en diversité selon la revendication 5, **caractérisé en ce que** le détecteur de niveau de signal (9) est disposé dans le chemin commun (1).

7. Dispositif de réception en diversité selon la revendication 5, **caractérisé en ce qu'**un détecteur de niveau de signal (9) est disposé dans chaque chemin de signal (10, 20).

8. Dispositif de réception en diversité selon la revendication 5, **caractérisé en ce que** la ligne de commande (16, 26) est connectée à une entrée de commande de l'amplificateur (13', 23').

9. Dispositif de réception en diversité selon la revendication 8, **caractérisé en ce qu'**un filtre passe-bas (36') est disposé au niveau de l'entrée de commande de l'amplificateur (13', 23').
